# FASCICULE DE BREVET EUROPEEN

(11) **EP 1 509 888 B1**
(45) Date de publication et mention de la délivrance du brevet: **04.09.2013**
(21) Numéro de dépôt: 03755996.0
(22) Date de dépôt: 14.05.2003
(51) Int. Cl.: G06Q 20/00, G07F 19/00, G07F 7/10

(54) **PROCEDE DE SECURISATION D UNE TRANSACTION EN LIGNE**
VERFAHREN ZUR SICHERUNG EINER ON-LINE TRANSAKTION
METHOD FOR SECURING AN ON-LINE TRANSACTION

(30) Priorité: 31.05.2002 FR 0206760
(43) Date de publication de la demande: 02.03.2005
(73) Titulaire: Gemalto SA, 92190 Meudon (FR)
(72) Inventeur: SAUVEBOIS, Jean-Paul, F-92190 Meudon (FR)
(74) Mandataire: Cassagne, Philippe M.J.
(86) Numéro de dépôt international: PCT/FR2003/001460
(87) Numéro de publication internationale: WO 2003/102882

(56) Documents cités:
- EP-A- 0 427 465
- EP-A- 0 773 647
- EP-A- 1 026 644
- GB-A- 2 261 538
- US-A- 5 903 721

## Description

La présente invention concerne la sécurisation d'une transaction commerciale acquittée en ligne par un client au moyen d'une carte à puce.

Elle trouve une application générale dans la sécurisation des échanges de données et plus particulièrement dans le commerce électronique lorsque le client utilise un ordinateur personnel communiquant en ligne, via Internet, avec un site marchand.

Le développement du commerce électronique nécessite un haut niveau de sécurisation des paiements électroniques. Il est en particulier nécessaire de prévoir :
- un processus d'authentification garantissant l'identité des deux acteurs ;
- l'intégrité des informations transmises à l'occasion de la transaction et du paiement ;
- la confidentialité des informations échangées
- la non-répudiation afin d'éviter toute contestation de la transaction ou du paiement.

Des solutions ont été imaginées pour sécuriser les paiements électroniques tel que le système C-SET proposé par les grands acteurs de cartes tels que Visa, Mastercard, American Express, JCB associant le protocole SET et la carte à puce (cf. par exemple le document Integrated Circuit Card Specification for Payment System, EMV2000 version 4.0, annex D « Transaction Processing for Chip Electronic Commerce »). D'autres solutions sont décrites par exemple dans les documents EP 0427465, GB 2 261 538 ou encore EP 1026 644.

D'une manière générale, la sécurité des transactions effectuées au moyen d'une carte à puce repose sur le contrôle de l'authenticité du titulaire de la carte à travers la signature électronique que constitue la saisie d'un mot de passe, encore appelé code d'authentification ou PIN code (PIN étant l'acronyme anglais de Personnal Identification Number) et connu du seul client et de l'autorité d'authentification.

La saisie du PIN code sur le clavier d'un poste de traitement, par exemple un ordinateur personnel connecté à un lecteur de carte à puce présente des risques.

En effet, la frappe au clavier expose le PIN code à la capture visuelle. De plus, le traitement du PIN code par l'ordinateur l'expose soit à un espionnage local soit à un espionnage à distance, lorsque les fraudeurs ont accès via Internet à l'ordinateur.

Par exemple, des programmes espions, résidant dans l'ordinateur, enregistrent les pages web et les entrées clavier lors de chaque session. Ces informations sont réexpédiées discrètement comme attachement de courrier aux fraudeurs. L'analyse de ces documents permet ensuite au fraudeur de retrouver le PIN code et autre information financière de l'usager, nom, adresse, numéro de carte, etc.

Des agents locaux peuvent aussi se substituer au titulaire pour effectuer une transaction à son insu et à ses dépens depuis l'ordinateur.

Une autre fraude consiste dans la prise de contrôle à distance de l'ordinateur par un fraudeur. Celui-ci voit l'écran et agit sur le clavier. Le téléfraudeur peut remplacer l'agent local, mais aussi réussir les tests de reconnaissance de forme. Il peut agir au cours d'une vraie transaction pour en modifier les termes et laisser l'utilisateur légitime signer à sa place, etc.

De même, le trajet du PIN code dans le câble reliant l'ordinateur au lecteur et son passage dans ce dernier présente également des risques de capture, permettant ensuite à un fraudeur d'opérer des transactions à la place de l'usager imprudent qui a laissé sa carte dans le lecteur, voire encore interférer dans une transaction légitime, pour en modifier les termes tels que montant ou bénéficiaire.

On connaît des lecteurs sécurisés avec clavier intégré permettant de sécuriser la saisie du PIN code notamment en évitant que ce PIN code ne transite par le terminal.

Toutefois de tels lecteurs sécurisés présentent l'inconvénient d'être onéreux.

La présente invention remédie à cet inconvénient en fournissant une solution dont la mise en place s'effectue dans un environnement non sécurisé du type ordinateur personnel, et dont le déploiement est facile et peu onéreux tout en conférant un degré de sécurité satisfaisant.

Elle porte sur un procédé de sécurisation d'une transaction réalisée en ligne par un client au moyen d'une carte à puce, défini par les termes de la revendication1.

Selon une définition générale de l'invention, le procédé comprend les étapes suivantes :
a) charger dans la carte à puce, un fichier image comportant une pluralité d'éléments susceptibles de former un clavier graphique sur l'écran du poste de traitement pour la saisie d'un code d'authentification, chaque élément du clavier graphique étant identifié par des coordonnées correspondantes ;
b) en provenance de la carte à puce, charger le fichier image dans le poste de traitement afin d'afficher ledit clavier graphique sur ledit écran ;
c) faire sélectionner par le client au moins un élément dudit clavier graphique ainsi affiché pour saisir ledit code d'authentification ;
d) transmettre à la carte à puce les coordonnées correspondantes de l'élément du clavier graphique ainsi sélectionné par le client ;
e) au niveau de la carte à puce, comparer les coordonnées du code d'authentification déduites des coordonnées de l'élément du clavier graphique ainsi transmises avec celles du code d'authentification du client inscrit dans la carte à puce ;
f) en cas de comparaison positive, au niveau de la carte, chiffrer un certificat comprenant un mot lié au résultat de la comparaison, un identifiant, et un défi-challenge liant le résultat à la transaction en cours, et envoyer ledit certificat ainsi chiffré à destination de l'autorité d'authentification ; et
g) au niveau de l'autorité d'authentification, déchiffrer le certificat ainsi envoyé afin de vérifier l'authenticité du titulaire de la carte, et en cas de vérification positive, autoriser la transaction.

Ainsi, l'authenticité du titulaire de la carte à puce est vérifiée en saisissant le code d'authentification sur un clavier graphique généré à travers un procédé mis en place entre l'autorité d'authentification et la carte à puce. Un tel procédé a l'avantage de réutiliser l'écran du poste de traitement sans exiger l'ajout d'un autre écran et de fonctionner dans un environnement non sécurisé (ordinateur personnel) qui assure néanmoins une confidentialité du titulaire de la carte vis-à-vis des attaques locales et distantes mentionnées ci-avant.

Selon un autre aspect de l'invention, le procédé comprend en outre un test de proximité destiné à vérifier la présence physique du client à proximité du poste de traitement au cours de la transaction en ligne. Ainsi, on sécurise également le fait que le client qui réalise la transaction est bien une personne qui est physiquement à proximité de son écran et physiquement en possession de la carte à puce.

Ce test est donc une autre contre mesure efficace contre un espionnage à distance d'une transaction.

Le test de proximité consiste essentiellement à faire saisir par le client une information que lui a communiquée la carte directement ou via le lecteur de carte.

De préférence, le test de proximité comprend les étapes suivantes :
i) équiper le lecteur de carte à puce de moyens de diffusion d'informations visuelles et/ou sonores sous la commande de la carte à puce ;
ii) faire commander par la carte à puce la diffusion d'un jeu choisi d'informations visuelles et/ou sonores ;
iii) en réponse à la diffusion du jeu d'informations, faire actionner sélectivement par le client l'interface homme/machine du poste de traitement afin d'émettre à destination de la carte un jeu d'informations en réplique au jeu d'information émis par la carte ;
iv) au niveau de la carte, recevoir le jeu d'informations engendré par le client et le comparer avec le jeu d'informations engendré par la carte à puce ; et
v) en cas de comparaison positive, autoriser la transaction.

En pratique, ce test de proximité peut être mis en oeuvre à tout moment de la transaction, c'est-à-dire avant, pendant et/ou après.

Selon un autre aspect de l'invention, il convient de vérifier que le client paie le montant correct au marchand légitime et que le client ne peut refuser ultérieurement la transaction proprement dite. Il convient aussi d'éviter toute substitution dans les éléments de la transaction par un pirate (hacker) au profit d'une autre transaction dudit pirate.

Pour cela, l'invention prévoit également une procédure de non-répudiation de la transaction.

En pratique, la procédure de non-répudiation comprend les étapes suivantes :
I) au niveau de l'autorité d'authentification, stocker dans un fichier image des informations financières relatives à la transaction ;
II) transmettre ledit fichier image lié à la transaction à destination de la carte à puce via le poste de traitement et le lecteur de carte à puce ;
III) en provenance de la carte, charger dans ledit poste de traitement ledit fichier image afin de l'afficher à l'écran ;
IV) sélectionner par le client au moins une information financière dudit fichier image ainsi affiché ;
V) transmettre à la carte à puce les coordonnées correspondantes de ladite information financière ainsi sélectionnée par le client ;
VI) au niveau de la carte à puce, chiffrer un message comprenant au moins ladite information financière de la transaction ainsi déduite ; et envoyer ledit message ainsi chiffré à destination de l'autorité d'authentification, et
VII) au niveau de l'autorité d'authentification, déchiffrer le message ainsi envoyé, vérifier l'information financière associée et valider la transaction en cas de vérification positive.

La présente invention a également pour objet un dispositif pour la mise en oeuvre du procédé selon l'invention.

La présente invention a également pour objet un programme d'ordinateur apte à être exécuté sur un ordinateur pour réaliser les fonctionnalités techniques du procédé selon l'invention.

D'autres caractéristiques et avantages de l'invention apparaîtront à la lumière de la description détaillée d'un mode de réalisation non limitatif de l'invention en se référant aux dessins annexés dans lesquels :
- la figure 1 est une vue schématique des dispositifs participant à la réalisation d'une transaction selon l'invention ;
- la figure 2 illustre les étapes du test de proximité selon l'invention ;
- la figure 3 illustre les étapes d'authentification du titulaire de la carte à puce selon l'invention ; et
- la figure 4 illustre les étapes de non-répudiation de la transaction selon l'invention.

L'exemple choisi pour illustrer la présente invention concerne une application de transaction électronique réalisée sur le réseau Internet. Bien évidemment, l'invention n'est pas limitée à cette seule application et concerne plus généralement toutes les applications sécurisées mettant en oeuvre une carte à puce.

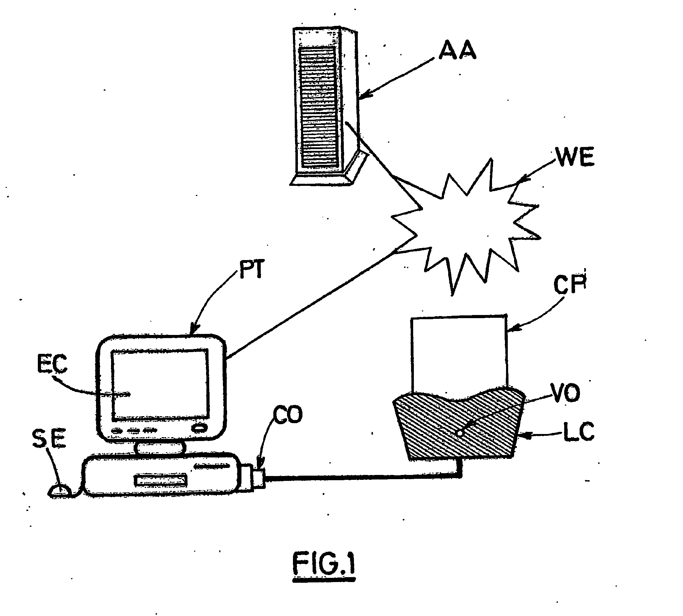

De préférence à la figure 1, il est prévu de réaliser en toute sécurité une transaction électronique entre un utilisateur et un site marchand. L'utilisateur est installé devant une station au poste de traitement PT qui est par exemple son ordinateur personnel.

Cet ordinateur PT est connecté au réseau Internet WE et permet d'accéder à un site web marchand (non représenté) en relation avec une autorité d'authentification AA.

S'étant décidé à acquérir un article sur le site marchand, le titulaire passe alors un ordre d'achat et communique les données d'identification requises par le fournisseur et notamment les références de sa carte de paiement.

Pour ce faire, le titulaire tape des données sur le clavier de son ordinateur PT et les transmet via le réseau Internet au site marchand. La communication entre le site marchand et l'autorité d'authentification AA s'opère alors selon le protocole en vigueur sur le site marchand

Par exemple, le protocole "3D secure" développé par la société VISA peut être mis en oeuvre.

Lorsque la communication est sécurisée, comme avec le protocole "3D secure", l'identité et l'authenticité de l'utilisateur doivent être garanties. Pour ce faire, l'utilisateur doit adresser des certificats chiffrés reposant sur des méthodes de chiffrements connues, qu'elles soient de type symétrique ou à clé secrète (DES) ou asymétrique ou à clé publique (RSA).

Afin de garantir l'identité et l'authenticité de l'utilisateur, ces certificats chiffrés mettent en oeuvre des logiciels et des clés que seul l'utilisateur a en sa possession.

L'implantation de telles informations secrètes ne peut se faire dans l'ordinateur PT dont toutes les ressources sont facilement accessibles notamment via des logiciels espion et autres virus informatiques.

Ces données secrètes sont donc préférentiellement stockées et ce, de façon parfaitement inviolable dans le circuit électronique d'une carte à puce CP, en l'occurrence, sa carte de paiement classique ou bien encore une carte de paiement dédiée aux achats sur Internet.

L'utilisateur dispose donc d'une carte de paiement CP à puce électronique obtenue auprès d'un établissement financier approprié. Cette carte est insérée dans un lecteur de carte LC connecté à l'ordinateur PT, ce qui permet à ce dernier d'accéder aux ressources logicielles de la carte CP.

L'ordinateur PT est équipé d'un logiciel approprié, de type émulation de terminal bancaire, et ce de façon à pouvoir adresser au site marchand un certificat d'authentification ou d'intégrité qui sera ensuite adressé par ce dernier à une autorité d'authentification AA (serveur bancaire) pour obtenir l'autorisation de la banque pour accepter la transaction. L'accès logiciel à la carte déclenchant l'émission de certificats chiffrés nécessite préalablement la présentation d'un code secret (ou code d'authentification) mémorisé par l'utilisateur et appelé PIN code.

La carte à puce CP est un objet normalisé tel que notamment défini dans les nomes ISO 7810, 7816 et 14443.

La carte selon l'invention est apte à communiquer avec le monde extérieur, par exemple l'ordinateur PT, au moyen des contacts de la carte à puce CP.

Il s'agit notamment du contact VCC qui pourvoit la puce en tension d'alimentation, du contact GND qui assure une mise à la masse de la puce et des contacts D+ et D- qui assurent une transmission bidirectionnelle des données.

Lorsque la transmission des données est assurée par les contacts D+ et D-, le format de ces données ainsi que le protocole utilisé sont définis par la norme USB.

L'interface USB de la carte effectue un décodage des données transmises par les contacts G+ et G- et les reformate de manière que lesdites données puissent être générées et gérées par la carte à puce CP et plus exactement par son unité centrale.

La transmission USB entre la carte CP et le lecteur LC ainsi qu'entre le lecteur LC et l'ordinateur PT présente l'avantage d'être rapide et synchrone en mode semi-duplex, ce qui supprime le besoin de transmettre un signal d'horloge via le contact d'Horloge.

Le contact I/O (entrée/sortie) se trouve ainsi libre et peut être utilisé pour transmettre le code PIN.

En pratique, le lecteur de carte à puce LC selon l'invention est destiné à accueillir la carte CP de manière à être connecté par un protocole USB.

Il comporte un boîtier où est insérée la carte CP et un cordon muni d'une fiche USB destiné au raccordement du lecteur au port USB correspondant de l'ordinateur PT.

Le boîtier comporte un logement destiné à recevoir au moins partiellement la carte à puce CP.

Le logement comportant le lecteur de carte à puce LC comprend des moyens de connexion avec les plages de contact affleurantes de la carte à puce CP.

Ces moyens de connexion comportent cinq pattes formant broche, quatre pattes correspondant aux plages USB de la carte CP, c'est-à-dire D +, D -, VCC et GND et une patte correspondant à la sortie entrée / sortie.

Cette patte entrée / sortie est connectée à un circuit VO approprié interne au lecteur de carte à puce LC.

Ce circuit VO est par exemple, le circuit d'alimentation d'une diode électroluminescente LED montée sur le lecteur de câble LC de façon à être visible par l'utilisateur.

En variante, ce circuit VO peut être un émetteur d'informations sonores et/ ou visuelles.

Grâce à ce circuit VO et à la diffusion des informations correspondantes, la carte à puce CP va être à même à communiquer visuellement des données à l'utilisateur et ce sans que l'ordinateur connecté au lecteur LC ne puisse s'en rendre compte.

Comme on le verra plus en détail ci-après, le circuit VO va participer au test de proximité défini plus haut.

De son côté, par exemple le poste de traitement PT comprend des moyens de sélection SE capables de sélectionner une partie de l'écran EC, une souris ou bien encore un stylo tactile ou analogue.

De son côté, selon l'invention, l'autorité d'authentification AA comprend des moyens générateurs aptes à engendrer au moins un programme lui-même apte à engendrer un fichier image (par exemple en bit map) sur l'écran EC.

En pratique, le fichier image comporte au moins une pluralité d'éléments susceptibles de former un clavier graphique sur l'écran EC pour la saisie d'un code d'authentification.

Chaque élément du fichier image en bit map est identifié par des coordonnées correspondantes, par exemple en X et Y, sur l'écran EC. Les éléments du fichier image peuvent être constitués d'éléments appartenant au groupe formé par des représentations de concepts, des représentations graphiques, des représentations alphanumériques simples ou complexes, des pictogrammes, des images, des combinaisons de représentations graphiques et alphanumériques, des représentations graphiques modifiées suivant des contre mesures choisies.

Il est très facile à un utilisateur de retenir une combinaison de concepts plutôt qu'une combinaison arbitraire de lettres et de chiffres qui est très difficile à mémoriser.

Inversement, retrouver à partir des représentations graphiques de type images, textes et dessins choisis par l'utilisateur est extrêmement difficile pour d'éventuels pirates pour lesquels les outils informatiques existants sont d'une aide limitée.

De façon avantageuse mais non limitative, le procédé d'authentification que l'on va décrire plus en détail ci-après utilise une telle représentation conceptuelle.

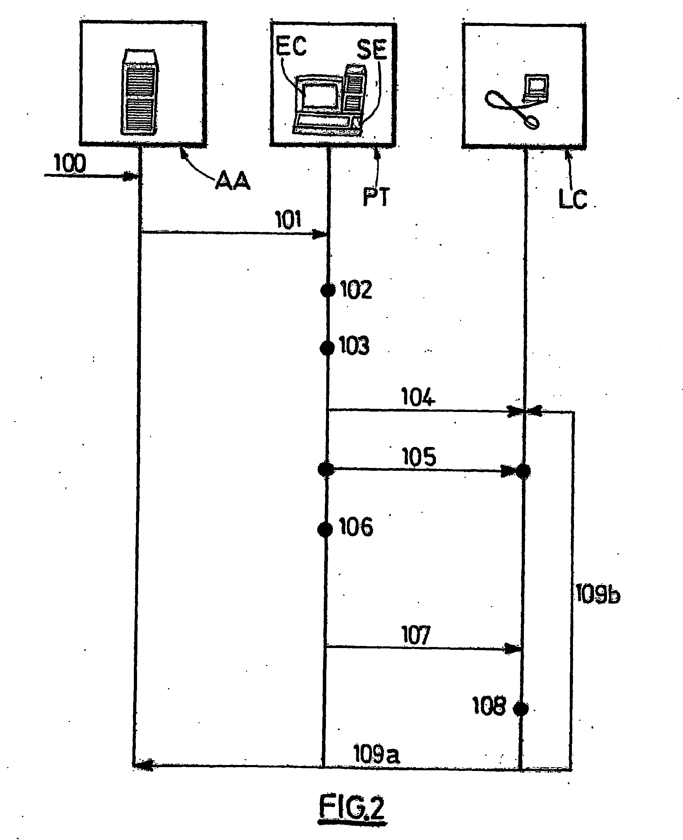

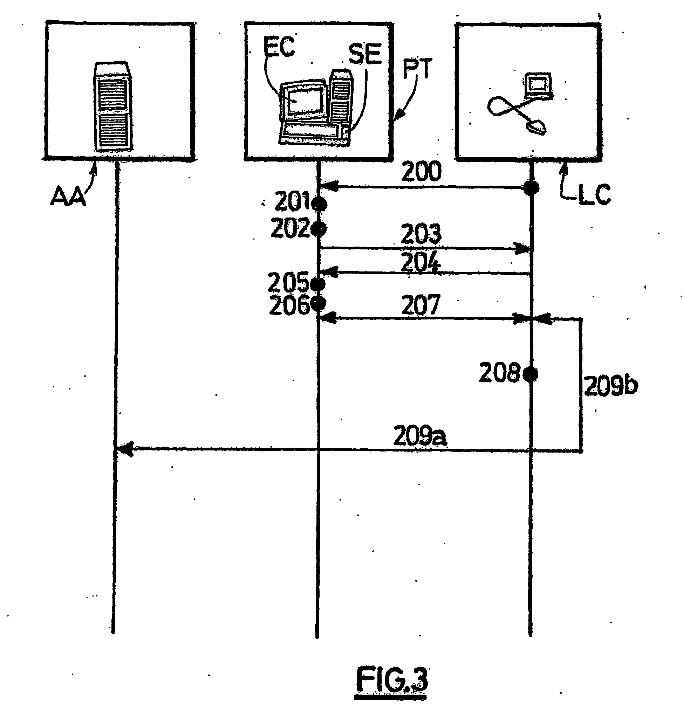

On décrit maintenant l'ensemble des étapes d'authentification de procéder selon l'invention en référence aux figures 2 à 4.

Tout d'abord (figure 2), on procède au test de proximité :
Etape 100 : l'autorité d'authentification AA reçoit une demande d'authentification émanant du site marchand (non représenté) via un protocole sécurisé du type 3D secure par exemple.
Etape 101 : l'autorité d'authentification AA envoie un programme au poste de traitement PT.

Ce programme comprend de façon chiffrée (c'est-à-dire cryptée à l'aide d'une clé publique dans le cas d'une fonction crytographique du type RSA) le nombre de flashs lumineux diffusés par le circuit VO, un défi-challenge et d'autres informations que l'on décrira plus en détail ci-après.

Etape 102 : le poste de traitement PT affiche sur l'écran EC un message destiné à utilisateur.

Ce message peut avoir la teneur suivante "vous êtes invité à conduire un test de proximité, veuillez insérer votre carte et réagir à chaque flash de votre lecteur de carte en cliquant sur le cercle rouge, indiquez OK lorsque vous êtes prêt à commencer".

Etape 103 : l'utilisateur clique sur OK.

Etape 104 : le poste de traitement PT envoie au lecteur de carte LC une appliquette (applet) APDU comprenant un message chiffré constitué du nombre de flashs lumineux et d'un défi-challenge émanant de l'autorité d'authentification

Etape 105 : la carte à puce CP et l'utilisateur échangent par l'intermédiaire du lecteur LC et du poste de traitement PT, des informations sous forme de questions/réponses. Par exemple, la carte à puce CP peut envoyer une information visuelle et/ ou sonore s'affichant ou étant diffusée sur le circuit VO.

Par exemple, ces informations correspondent aux flashs visuels (en nombre et en durée) prévus par l'autorité d'authentification.

Etape 106 : l'utilisateur clique sur l'écran EC du poste de traitement PT. Le nombre d'échanges est déterminé à l'avance (nombre et durée des flashs lumineux).

Etape 107, le poste de traitement PT s'adresse à la carte CP, en réplique aux sollicitations visuelles diffusées par le circuit VO. Cette réplique comprend par exemple des informations clavier ou souris SE retournées par l'utilisateur en réponse à la série aléatoire (en nombre et en durée) des impulsions aux flashs lumineux.

Etape 108 : les informations engendrées par le client sur l'écran EC sont comparées avec le jeu d'informations attendu par la carte à puce CP (nombre et durée des flashs).

En pratique l'enveloppe temporelle des signaux lumineux du circuit VO et celle reconstituée par le traitement des messages émis par le poste de traitement PT sont corrélées par la carte CP.

Si les deux enveloppes se superposent, alors la carte établit que l'utilisateur a vu la carte CP.

Etape 109a, en cas de comparaison positive, le test est considéré réussi et la suite des opérations de la transaction peuvent être effectuée. Etape 109b, en cas de comparaison négative, l'opération reprend à l'étape initiale.

Il peut être prévu qu'au bout d'un nombre de comparaisons négatives, la carte à puce CP bloque.

Ainsi, le test de proximité permet de vérifier la présence physique de l'utilisateur.

Une variante dans la conduite du test de proximité consiste à demander à l'utilisateur de régir à chaque « flash » non pas en cliquant sur une zone de son écran mais en pressant un bouton poussoir dont peut être pourvu le connecteur de carte à puce.

Le test de proximité est garanti par la portée visuelle du voyant VO du connecteur CO et ne peut être simulé par un agent frauduleux distant (espionnage et pilotage distant via le réseau) ou résidant dans l'ordinateur PT par ces différents cas, le fraudeur est virtuellement aveugle.

La transaction sécurisée peut commencer, finir ou bien encore incorporer ce test de proximité et interdire ainsi la télécommande de la carte CP par un agent distant frauduleux et le verrouillage de la carte par la présentation de trois faux PIN codes.

Ensuite, il est prévu une étape d'authentification du titulaire de la carte à puce CP.

Etape 200 : la carte CP envoie un message informant le poste de traitement PT que le test de proximité est positif.

Etape 201 : en cas de test de proximité positif, l'ordinateur affiche le message suivant : "test de proximité réussi. Il vous est maintenant demandé de vous authentifier. Un clavier graphique sera affiché incessamment. Veuillez entrer votre mot de passe en cliquant sur l'écran à l'aide de votre souris. Cliquez OK lorsque vous êtes prêt à commencer la procédure d'authentification".

Etape 202 : l'utilisateur clique sur OK.

Etape 203 : le poste de traitement PT envoie à la carte CP une requête d'affichage d'un clavier graphique.

Etape 204 : la carte à puce CP envoie les éléments du clavier graphique. Etape 205 : l'écran EC affiche le clavier graphique généré par la carte à puce CP.

Ainsi, un clavier graphique est mis à la disposition de l'utilisateur afin qu'il puisse saisir son code d'authentification.

Etape 206 : l'utilisateur saisit un code d'authentification en conformité avec les instructions affichées sur l'écran EC.

L'utilisateur choisit à l'aide de sa souris SE au moins un élément du clavier graphique pour saisir son code d'authentification.

Etape 207 : les coordonnées correspondant au code d'authentification sélectionné par l'utilisateur sur le clavier graphique sont transférées à la carte à puce CP.

Etape 208 : au sein de la carte à puce CP, les coordonnées du code d'authentification transférées sont comparées avec celles inscrites dans la carte à puce CP.

Etape 209a : en cas de comparaison positive, l'autorité d'authentification AA reçoit de la carte à puce CP une confirmation de l'authentification sous forme de message.

Lors de l'envoi du message, la carte à puce CP crypte (chiffre) le contenu du message à l'aide de sa clé publique.

De son côté, le destinataire du message chiffré, ici l'autorité d'authentification AA décrypte (déchiffre) le contenu à l'aide de sa clé privée.

Etape 209b : en cas de comparaison négative, l'opération reprend à l'étape 207.

Il peut être prévu qu'au bout d'un nombre de comparaisons négatives, la carte à puce CP bloque.

Par exemple, lorsque les coordonnées X et Y sur le clavier graphique correspondent à une image indexée "4"

Seule la carte CP sait que l'image indexée "4" peut correspondre à une représentation numérique du chiffre 3, par exemple.

Seule la carte CP connaît cette table de correspondance qui peut varier à chaque transaction.

Lorsque la carte CP reçoit les coordonnées du clavier graphique et vérifie qu'elles correspondent bien au code d'authentification, en cas de comparaison positive la carte CP signe (chiffre) le message formant résultat et envoie à l'attention de l'autorité d'authentification AA le transformé du défi par la fonction d'authentification et l'envoie au serveur.

De son côté, le serveur vérifie la signature (déchiffre), compare la réponse au défi et en cas de vérification positive, autorise la transaction car le titulaire est bien authentique.

En cas de comparaison négative, il peut être affiché le message suivant : "authentification refusée, il vous reste deux tentatives".

Si l'utilisateur clique sur " annuler" un message de confirmation est affiché ayant la teneur suivante : "cette opération annulera votre transaction, êtes-vous sûr de vouloir annuler oui ou non" si l'utilisateur choisit la réponse oui, l'utilisateur est redirigé vers le site marchand correspondant, si l'utilisateur choisi la réponse non, l'utilisateur est invité selon le message suivant : "cliquer OK pour essayer à nouveau le test d'authentification".

De plus, la présente invention prévoit une procédure de non-répudiation de la transaction.

Cette option permet de générer un nouvel élément visuel qui permet à l'utilisateur de valider les informations financières relatives à son achat. Les informations financières relatives à son achat peuvent être le nom du site marchand, le montant, la monnaie, l'ordre de commande.

Ces informations sont affichées sous forme de graphique afin de s'assurer qu'elles ne pourront pas être frauduleusement modifiées par opposition à une information qui voyage sur le réseau entre le site marchand et l'ordinateur avec les risques mentionnés ci-avant.

Le service de non-répudiation de la transaction selon l'invention permet ici de parer à la répudiation a posteriori de certains éléments de la transaction (montant, monnaie, date, etc.).

Le mécanisme fait appel à l'autorité d'authentification (AA) qui effectue ici des calculs de certificats (ou signature) sur lesdites informations attachées à la transaction.

De son côté, la carte à puce (CP) vérifie les certificats correspondants. L'utilisateur doit conserver les éléments de la transaction et les certificats associés pour les utiliser plus tard en cas de litige.

En pratique, le mécanisme de non-répudiation selon l'invention met en oeuvre une signature de la transaction (avec le mot de passe ou PIN code du client) afin d'authentifier ledit client et de parer à une répudiation de l'achat ainsi qu'un accusé de réception signé afin de parer à la répudiation à la réception de l'achat.

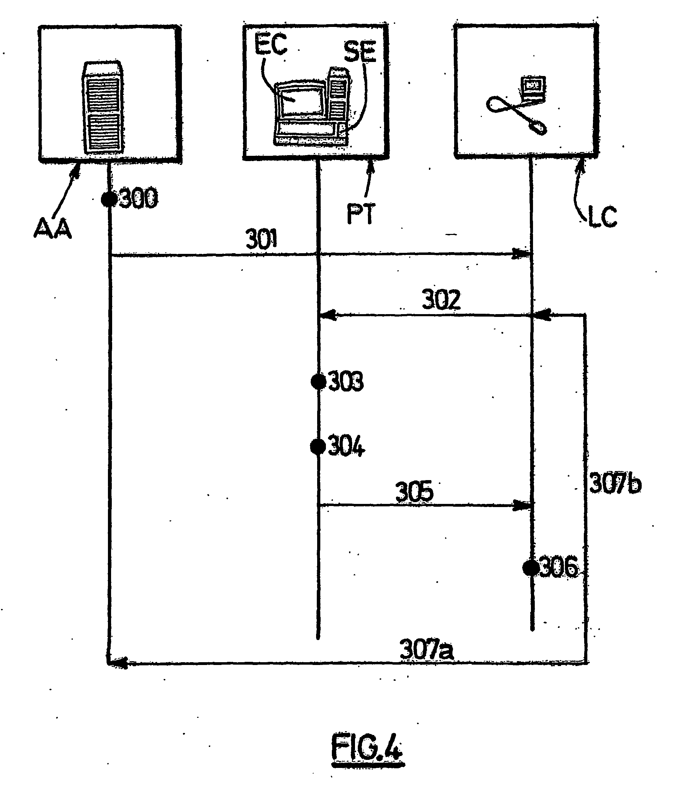

Par exemple (figure 4), selon l'étape 300, l'autorité d'authentification stocke dans un fichier image les informations commerciales concernant la transaction.

Il peut s'agir du montant de la transaction ou de la monnaie dans laquelle elle a été effectuée, l'heure et/ou la date à laquelle a été effectuée la référence de la commande, etc.,

Etape 301 : l'autorité d'authentification AA envoie l'information commerciale à la carte à puce CP via le poste de traitement PT et le lecteur de carte à puce LC.

Etape 302 : la carte à puce transmet les éléments graphiques contenant l'information commerciale.

Etape 303 : le poste de traitement PT les affiche sur l'écran EC

Etape 304 : l'utilisateur valide l'information en cliquant sur l'icône ou la représentation graphique correspondante affichée sur l'écran EC.

Etape 305 : les coordonnées correspondantes sont transférées à la carte à puce CP.

Etape 306 : au sein de la carte à puce CP, les coordonnées transférées par le poste de traitement sont comparées avec celles correspondant à l'information telles que reçues à l'étape 301.

Etape 307a : en cas de comparaison positive, l'autorité d'authentification AA reçoit de la carte à puce CP une confirmation tandis que selon l'étape 307b, en cas de comparaison négative l'opération reprend l'étape 302.

Il peut être prévu qu'au bout d'un nombre de comparaisons négatives, la transaction soit annulée.

On peut également prévoir qu'il s'affiche sur l'écran EC un élément d'annulation sur lequel l'utilisateur peut cliquer pour annuler la transaction.

Ainsi, l'utilisateur a la possibilité de confirmer la transaction.

Ceci permet de limiter les contestations au moment de la livraison du produit commandé.

## Revendications

1. Procédé de sécurisation d'une transaction réalisée en ligne par un client au moyen d'une carte à puce (CP), ledit client étant apte à utiliser un poste de traitement (PT) apte à communiquer en ligne avec une autorité d'authéntification (AA) et équipé d'une interface homme/machine telle qu'un écran (EC), et d'un lecteur de carte à puce (LC), **caractérisé en ce qu'**il comprend un test de proximité apte à communiquer permettant de vérifier la présence physique du client à proximité du poste de traitement (PT) apte à communiquer en ligne avec l'autorité d'authentification (AA), un test d'authentification du titulaire de la carte à puce (CP) et
un test de non-répudiation de la transaction. Le test de proximité comprenant la saisie d'une information par le client coïncidant avec une information émise par la carte à puce directement ou via le lecteur de carte.

2. Procédé de sécurisation d'une transaction selon la revendication 1, caractérisé en ce le test d'authentification du titulaire comprend la saisie d'un code secret d'identification par le client et le contrôle dudit code par ladite carte à puce.

3. Procédé de sécurisation d'une transaction selon la revendication 1, caractérisé en ce le test d'authentificatlon du titulaire comprend les étapes suivantes :
a) charger dans la carte à puce (CP), un fichier image comportant une pluralité d'éléments susceptibles de former un clavier graphique sur l'écran (EC) du poste de traitement (PT) pour la saisie d'un code d'authentification, chaque élément du clavier graphique étant identifié par des coordonnées correspondantes ;
b) en provenance de la carte à puce (CP), charger le fichier image dans le poste de traitement (PT) afin d'afficher ledit clavier graphique à l'écran (EC) ;
c) faire sélectionner par le client au moins un élément dudit clavier graphique ainsi affiche pour saisir ledit code d'authentification ;
d) transmettre à la carte à puce (CP) les coordonnées correspondantes de l'élément du clavier graphique ainsi sélectionné par le client ;
e) au niveau de la carte à puce (CP) comparer les coordonnées du code déduites des coordonnées de l'élément du clavier ainsi transmises avec celles du code d'authentification du client inscrit dans la carte à puce (CP) ;
f) en cas de comparaison positive, au niveau de la carte, chiffrer un certificat comprenant au moins un mot lié au résultat de la comparaison, un identifiant, et un défi-challenge liant le résultat à la transaction en cours ; et envoyer ledit certificat chiffré à destination de l'autorité d'authéntification (AA); et
g) au niveau de l'autorité d'authentification (AA), déchiffrer le certificat chiffré ainsi reçu afin de vérifier le certificat, et en cas de vérification positive, autoriser la transaction.

4. Procédé selon la revendication 1, **caractérisé en ce que** le test de proximité comprend les étapes suivantes :
i) équiper le lecteur de carte à puce (LC) de moyens de diffusion d'informations visuelles et/ou sonores sous la commande de la carte à puce (CP) ;
ii) de la part de la carte à puce (CP), commander la diffusion d'un jeu choisi d'informations visuelles et/ou sonores ;
iii) en réponse à la diffusion du jeu d'informations, faire actionner sélectïvement par le client l'interface homme/machine du poste de traitenient (PT) ou du connecteur (CO) du lecteur (LC) afin d'émettre à destination (CO) du lecteur (LC) de la carte (CP) un jeu d'informations en réplique au jeu d'information émis par là carte (CP) ;
iv) au niveau de la carte (CP), recevoir le jeu d'informations engendré par le client et le comparer avec le jeu d'informations engendré par la carte à puce (CP) ; et
v) en cas de comparaison positive, poursuivre la transaction.

5. Procédé selon la revendication 1, **caractérisé en ce que** le test de non-répudiation comprend les étapes suivantes :
I) au niveau de l'autorité d'authentification (AA), stocker dans un fichier image des informations commerciales relatives à la transaction ;
II) transmettre ledit fichier image lié à la transaction à destination de la carte à puce (CP) via le poste de traitement (PT) et le lecteur de carte à puce (LC) ;
III) en provenance de la carte, charger dans ledit poste de traitement (PT) ledit fichier image afin de l'afficher à l'écran (EC) ;
IV) faire sélectionner par le client au moins une information financière dudit fichier image ainsi affiché ;
V) transmettre à la carte à puce (CP) les coordonnées correspondantes de ladite information financière ainsi sélectionnée par le client ;
VI) au niveau de la carte à puce (CP), chiffrer un message comprenant au moins ladite information financière de la transaction ainsi déduite, et envoyer ledit message chiffré à destination de l'autorité d'authentification (AA), et
VII) au niveau de l'autorité d'authentification (AA), déchiffrer le message ainsi envoyé, afin de valider la transaction en cas de vérification positive.

6. Système comprenant un poste de traitement (PT) apte à communiquer en ligne avec une autorité d'authentification (AA) et équipé d'une interface homme/machine telle qu'un écran (EC), un lecteur de carte à puce (LC), ainsi qu'une carte à puce (CP), le système étant **caractérisé en ce qu'**il est arrangé pour sécuriser une transaction réalisée en ligne par un client détenant ladite carte à puce (CP) en mettant en oeuvre un procédé selon l'une quelconque des revendications 1 à 4.

7. Programme d'ordinateur apte à être exécuté sur un ordinateur pour étapes réaliser les étapes du procédé selon l'une des revendications 1 à 5.

## Patentansprüche

1. Verfahren zur Sicherung einer Transaktion, die von einem Kunden online und mithilfe einer Chipkarte (CP) durchgeführt wird, wobei der besagte Kunde mit einer Verarbeitungsstation (PT) umgehen und eine Online-Verbindung mit einer Authentifikationsstelle (AA) herstellen kann und mit einer Schnittstelle Mensch/Maschine, wie einem Bildschirm (EC) und einem Chipkartenleser (LC) ausgestattet ist, **dadurch gekennzeichnet, dass** sie die physische Anwesenheit des Kunden an der Verarbeitungsstation (PT) und seine Fähigkeit, eine Online-Verbindung mit einer Authentifizierungsstelle (AA) herzustellen prüfen und feststellen kann, über eine Authentifikationsprüfung des Chipkarteninhabers und über eine Prüfung der Nachweisbarkeit der Transaktion verfügt; wobei die Anwesenheitsprüfung die Eingabe einer Information durch den Kunden einschließt, die mit einer direkt durch die Chipkarte oder den Kartenleser gesendeten Information übereinstimmt.

2. Verfahren zur Sicherung einer Transaktion gemäß Anspruch 1, **dadurch gekennzeichnet, dass** die Authentifikationsprüfung des Chipkarteninhabers die Eingabe eines geheimen Identifizierungscodes durch den Kunden und die Überprüfung dieses Codes durch die jeweilige Chipkarte beinhaltet.

3. Verfahren zur Sicherung einer Transaktion gemäß Anspruch 1, **dadurch gekennzeichnet, dass** die Authentifikationsprüfung des Chipkarteninhabers folgende Schritte umfasst:
a) laden einer Bilddatei auf die Chipkarte (CP), die eine Mehrzahl von Elementen enthält, die auf dem Bildschirm (EC) der Verarbeitungsstation (PT) eine grafische Tastatur zur Eingabe des Authentifikationscodes abbilden, wobei jedes Element der grafischen Tastatur durch übereinstimmende Koordinaten identifiziert ist;
b) laden der Bilddatei von der Chipkarte (CP) auf die Verarbeitungsstation (PT), um die besagte grafische Tastatur am Bildschirm (EC) anzuzeigen;
c) Auswahl mindestens eines Elements der so angezeigten grafischen Tastatur durch den Kunden, um den jeweiligen Authentifikationscode einzugeben;
d) übertragen der Koordinaten des so durch den Kunden ausgewählten Elements der grafischen Tastatur auf die Chipkarte (CP);
e) Vergleich auf der Chipkarte (CP) der Koordinaten des Codes, die von den so übertragenen Koordinaten des Tastaturelements abgeleitet wurden, mit den Koordinaten des auf die Chipkarte (CP) geschrieben Authentifizierungscodes des Kunden;
f) im Fall eines positiven Ergebnisses beim Vergleich auf der Karte die Erzeugung eines verschlüsselten Zertifikats, das mindestens ein mit dem Vergleichsergebnis in Verbindung stehendes Wort, eine Identifizierung sowie eine Herausforderung, die das Ergebnis mit der laufenden Transaktion verbindet, enthält; Übersenden des verschlüsseltes Zertifikats an die Authentifikationsstelle (AA);
g) entschlüsseln des so empfangenen verschlüsselten Zertifikats durch die Authentifikationsstelle (AA), um das Zertifikat zu prüfen und im Fall einer positiven Prüfung, die Transaktion zu autorisieren.

4. Verfahren zur Sicherung einer Transaktion gemäß Anspruch 1, **dadurch gekennzeichnet, dass** die Anwesenheitsprüfung folgende Schritte aufweist:
i) ausstatten des Chipkartenleser (LC) mit Mitteln zur Übertragung von visuellen und/oder akustischen Informationen unter der Steuerung durch die Chipkarte (CP);
ii) Chipkarte (CP) steuert die Übertragung eines gewählten Satzes von visuellen und/oder akustischen Informationen;
iii) als Antwort auf die Übertragung des Informationssatzes, selektives Betätigen der Schnittstelle Mensch/Maschine der Verarbeitungsstation (PT) oder der Steckverbindung (CO) des Lesers (LC) durch den Kunden, um an die Chipkarte (CP), als Antwort auf den von der Chipkarte (CP) kommenden Informationssatz einen Informationssatz zu senden,
iv) Empfang des durch den Kunden erzeugten Informationssatzes auf der Chipkarte (CP) und Vergleich mit dem von der Chipkarte (CP) erzeugten Informationssatz;
v) im Fall eines positiven Vergleichs, fortführen der Transaktion.

5. Verfahren zur Sicherung einer Transaktion gemäß Anspruch 1, **dadurch gekennzeichnet, dass** die Prüfung der Nachweisbarkeit der Transaktion folgende Schritte aufweist:
I) speichern der gewerblichen Informationen der Transaktion in einer Bilddatei durch die Authentifikationsstelle (AA);
II) übertragen der jeweiligen mit der Transaktion verbundenen Bilddatei über die Verarbeitungsstation (PT) und den Chipkartenleser (LC) auf die Chipkarte (CP);
III) laden der jeweiligen Bilddatei in der jeweiligen Verarbeitungsstation (PT) von der Karte aus, um sie auf dem Bildschirm (EC) anzuzeigen;
IV) Auswahl mindestens einer finanziellen Information der so angezeigten Bilddatei durch den Kunden;
V) übertragen der übereinstimmenden Koordinaten der so vom Kunden ausgewählten finanziellen Information auf die Chipkarte (CP);
VI) verschlüsseln einer Nachricht auf der Chipkarte (CP), die mindestens die besagte so abgeleitete finanzielle Information der Transaktion enthält, und die diese verschlüsselte Nachricht an die Authentifikationsstelle (AA) senden;
VII) bei der Authentifikationsstelle (AA) die so gesendete Nachricht entschlüsseln, um die Transaktion im Fall einer positiven Prüfung zu autorisieren.

6. System, das eine Verarbeitungsstation (PT) umfasst, die eine Online-Verbindung mit einer Authentifikationsstelle (AA) herstellen kann und die mit einer Schnittstelle Mensch/Maschine, wie einem Bildschirm (EC), einem Chipkartenleser (LC) sowie mit einer Chipkarte (CP) ausgestattet ist, das System ist **dadurch gekennzeichnet, dass** es für die Sicherung online getätigter Transaktionen eines Kunden geeignet ist, der die jeweilige Chipkarte (CP) besitzt, wobei ein Verfahren gemäß irgendeinem der Ansprüche 1 bis 4 angewandt wird.

7. Computerprogramm, das auf einem Computer ausgeführt werden kann, um die Verfahrensschritte nach einem der Ansprüche 1 bis 5 durchzuführen.

## Claims

1. A method for securing a transaction that is carried out online by a customer using a smart card (CP), said customer being able to use a processing station (PT) able to communicate online with an authentication authority (AA) and fitted with a user interface such as a screen (EC), and a smart card reader (LC), **characterised in that** it comprises a proximity test that makes it possible to verify the physical presence of the customer close to the processing station (PT) able to communicate online with the authentication authority (AA), an authentication test of the holder of the smart card (CP) and a test of non-rejection of the transaction, wherein the proximity test comprises the entry of information by the customer coinciding with information emitted by the smart card directly or via the card reader.

2. A method for securing a transaction according to claim 1, **characterised in that** the authentication test of the holder includes the entry of a secret identification code by the customer and a check of said code by said smart card.

3. A method for securing a transaction according to claim 1, **characterised in that** the authentication test of the holder comprises the following steps:
a) loading into the smart card (CP) an image file comprising a plurality of elements that can form a graphics keyboard on the screen (EC) of the processing station (PT) for entering the authentication code, wherein each element of the graphics screen is identified by corresponding coordinates;
b) loading the image file from the smart card (CP) into the processing station (PT) in order to display said graphics screen on the screen (EC);
c) causing the selection by the customer of at least one element of said graphics screen thus displayed to enter said authentication code;
d) transmitting to the smart card (CP) the coordinates that correspond to the element of the graphics keyboard thus selected by the customer;
e) in the smart card (CP), comparing the code coordinates deducted from the coordinates of the element of the keyboard thus transmitted with those of the authentication code of the customer recorded in the smart card (CP);
f) if the comparison is positive, encrypting in the card a certificate comprising at least one word related to the result of the comparison, an identifier and a challenge connecting the result to the transaction in progress; and sending said encrypted certificate to the authentication authority (AA); and
g) on the part of the authentication authority (AA), decrypting the encrypted certificate thus received in order to verify the certificate, and if the verification is positive, authorising the transaction.

4. A method according to claim 1, **characterised in that** the proximity test comprises the following steps:
i) fitting the smart card (LC) reader with means to emit visual and/or sound information under the control of the smart card (CP);
ii) on the part of the smart card (CP), controlling the emission of selected pieces of visual and/or sound information;
iii) in response to the emission of the information, causing the customer to selectively use the user interface of the processing station (PT) or the connector (CO) of the reader (LC) in order to emit to the card (CP) a set of pieces of information to reply to the information emitted by the card (CP);
iv) on the part of the card (CP), receiving the set of pieces of information generated by the customer and comparing it with the set of pieces of information generated by the smart card (CP); and
v) if the comparison is positive, continuing the transaction.

5. A method according to claim 1, **characterised in that** the non-rejection test comprises the following steps:
I) on the part of the authentication authority (AA), storing in an image file commercial information relating to the transaction;
II) transmitting said image file related to the transaction to the smart card (CP) via the processing station (PT) and the smart card (LC) reader;
III) loading said image file from the card into the processing station (PT) in order to display it on the screen (EC);
IV) causing the customer to select at least one piece of financial information of said image file thus displayed;
V) transmitting to the smart card (CP) the coordinates that correspond to said financial information thus selected by the customer;
VI) in the smart card (CP), encrypting a message comprising at least said financial information of the transaction thus deducted and sending said encrypted message to the authentication authority (AA); and
VII) on the part of the authentication authority (AA), decrypting the message thus sent in order to validate the transaction if verification is positive.

6. A system comprising a processing station (PT) able to communicate online with an authentication authority (AA) and fitted with a user interface such as a screen (EC), a smart card reader (LC) and a smart card (CP), wherein the system is **characterised in that** it is arranged to secure a transaction carried out online by the customer holding said smart card (CP) using a method according to any of claims 1 to 4.

7. A computer program able to run on a computer to carry out the steps of the method according to any of claims 1 to 5.
